# EUROPEAN PATENT SPECIFICATION

(11) **EP 0 805 014 B1**
(45) Date of publication and mention of the grant of the patent: **25.07.2001**
(21) Application number: 97830193.5
(22) Date of filing: 28.04.1997
(51) Int. Cl.: B29C 47/16

(54) **Device for adjusting the gap between the lips of an extrusion die**
Vorrichtung zum Einstellen der Düsenlippen beim Strangpressen
Dispositif pour régler les lèvres d'une filière pour moulage par extrusion

(30) Priority: 03.05.1996 IT VA960008
(43) Date of publication of application: 05.11.1997
(73) Proprietor: OFFICINE FRATELLI CARRARO s.n.c., DI CARRARO GINO, ANGELO E C., 21050 Bisuschio (IT)
(72) Inventor: Carraro, Gino, 21050 Bisuschio (IT)
(74) Representative: Pellegri, Alberto

(56) References cited:
- EP-A- 0 484 711
- EP-A- 0 668 143
- BE-A- 1 009 215
- US-A- 4 003 689

## Description

This invention relates to a gap adjusting device between opposite lips of an extruder die according to the preamble of claim 1. The invention further relates to an extruder die according to the preamble of claim 3.

Flat extruder dies used for fabricating single or multiple flow plastic laminates are essential components of laminating systems for plastic materials and generally well known for their functional characteristics.

The European Patent Publication No. EP-679496-A1, filed on 24 April 1995 in the name of the same applicant, describes a particularly efficient configuration that facilitates the assembling and disassembling of the extruder die.

An important requisite of extruder dies is that of allowing the adjustment of the gap existing between the opposite lips of the assembled bodies that define the mouth or outlet gap of the produced plastic laminate, that is, the extrusion channel. This requisite is usually fulfilled by changing one or both lips according to needs. The lip or the lips are in these cases realized in the form of a replaceable appendices of the relative block that makes up the extruder die.

More recently, with the scope of avoiding frequent changes of the lip or lips for adjusting the extruder gap, the blocks or at least one of the blocks that composes the extruder die, has a configuration that defines a cantilevered lip of a certain flexibility. This is achieved by machining an ample necking near the lip of one of the blocks that make up the extruder die and by realizing appropriate pushing devices capable of forcibly flex the lip in order to narrow the gap with the opposite lip.

These pushing devices to trim the gap to the desired size are often constituted by one or more bolts having matched thermal expansion characteristics so to compensate for temperature variations and therefrom maintain a constant gap between the outlet lips of the extruder die, as described in the European Patent Application No. EP-668143-A1.

EP-0 668 143 A1 discloses an extrusion apparatus composed of a first and second body portions each having a lip interconnected with the main body, wherein a device for adjusting the gap between the two lips comprises an element translating along an axis parallel to the lips (152, 160) having appendixes (128) that engage inclined surfaces of a part (132) fastened to one of the lips.

More in general, the known gap adjustment devices of an extruder die require relatively costly and laborious machining operations, moreover they tend to cause detrimental stress concentrations and they essentially implement a "unidirectional" control being based upon the exertion or the release of a certain flexing force onto the flexible lip.

Vis-à-vis with these drawbacks of the known techniques, has now been found and is the object of the present invention an improved device for adjusting the gap between opposite lips of an extruder die for plastic laminates, capable of evenly distributing the exerted stresses and having an essentially bi-directional control of the gap adjustment. Moreover, the adjustment device of the invention may be economically fabricated, without requiring particularly burdensome machining operations to realize the parts that compose it.

This object is achieved according to the invention by the gap adjusting device as defined in claim 1 and by the extruder die as defined in claim 3.

A particular embodiment of the invention in the subject of dependent claim 2.

The relative advantages are attained by the device, which is substantially realized by a screw, rotatably mounted parallel to the flexible lip on two side plates of the extruder die, and having a right-hand threading along a first half of its length and a left-hand threading along the other half. Over each of these two oppositely threaded portions of the screw engage one or more lead-nut blocks, which mutually move in opposite directions when turning the drive screw in a clockwise or anticlockwise direction.

Each lead-nut block, besides having appropriate guides engaging cooperating guides to lead the linear translation thereof parallel to the extruder lips driven by the rotation of the screw, has a pin.

A pushing plate rigidly attachable to the flexible lip is provided with slots slanting towards the opposite direction and within which there engage the pins of the respective lead-nuts.

Turning the screw in one or the other direction, forces the translation of the lead-nuts, in apposite directions and the pins thereof positively control the raising or the lowering of the flexible lip, by acting upon the slanted surfaces of respective slits into which they are engaged, in function to the direction of movement of the lead-nut blocks engaged on the left-hand and right-hand portion of the screw.

By dividing the thread of the drive screw into a right-handed and a left-handed portion achieves the objective of preventing a severe stress concentration on the lateral plates of the extruder die, by producing instead depending on the turning direction, an axial tensioning or a compression of the screw.

Onto each portion of the adjustment screw (left-hand of right-hand) a plurality of translating of lead-nut blocks may be installed, commensurably to the width of the extruder die, so to distribute over a plurality of points, uniformly spaced among each other, the flexural stresses.

Moreover, the lead-nut blocks are identical and relatively easy to fabricate.

Also the lip raising/lowering slotted plate may be fabricated in a relatively simple way.

These and other aspects and advantages of the device of this invention will become even dearer from the following description of an important embodiment and by making reference to the accompanying drawings, wherein:
**Figure 1** is a cross section of an extruder die assembly that incorporates the device of the invention;
**Figure 2** is a perspective view of the lower block of the extruder die having a flexible lip and the gap adjusting device of the invention;
**Figure 3** is a detail that shows the drive screw and the lead-nuts blocks moving in opposite directions;
**Figure 4** is a perspective view of the slotted plate that exerts the lifting/lowering force to the flexible lip of the extruder die.

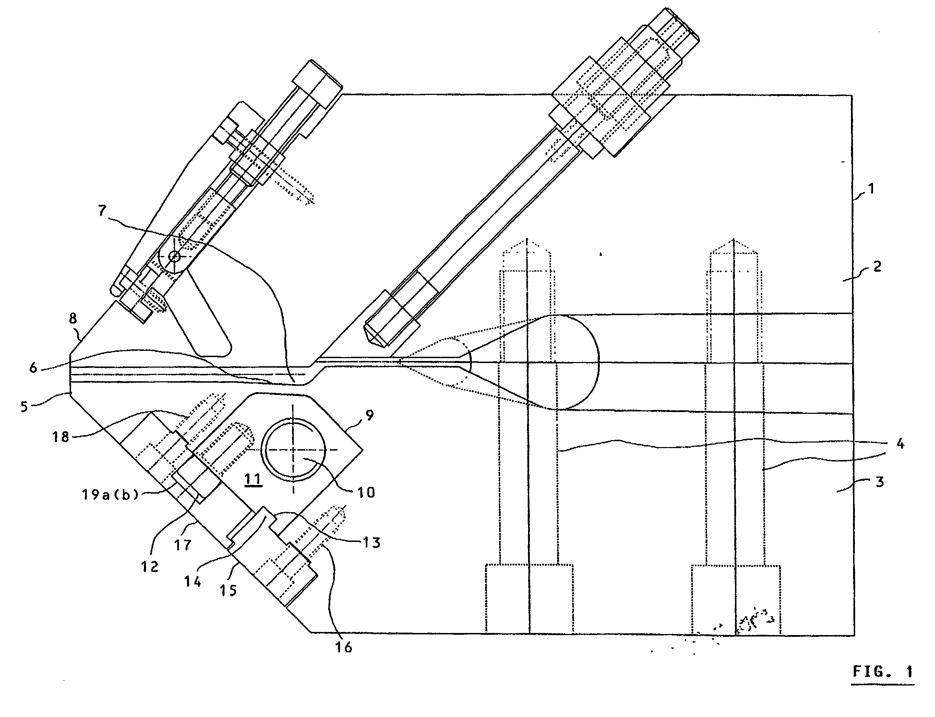

Purely for illustrative purposes and without any limitative intention, Figure 1 shows the application of the gap adjusting device of the invention to an extruder die indicated as a whole with 1 for thermoplastic laminates.

The shown extruder die is for flat single flow laminates (that is for homogeneous laminates constituted by a component only).

The general configuration and certain details shown in Figure 1 are normal or according to the common practice and therefore they will be readily understood by any person skilled in the art. A reiterated description of such common details of an extruder die is not considered necessary within the present context in order to fully comprehend the architecture and function of the novel gap adjusting device of the invention.

The gap adjusting device of the invention will be more readily understood by referring to the figures as a whole. In all the figures, the same parts are indicated by the same number so to facilitate the reading of the drawings.

The extruder die 1 is substantially composed of an upper body 2 and lower body 3, assembled together by means of bolts 4. The lower body 3 comprises a lip 5, which is linked to the body 3 by a zone 6 having strongly reduced section, which may projectively coincide with the distribution channel of the plastic material, which spreads out near and along the gap, constituting the actual extrusion channel which is defined by the opposite surfaces of the two lips 5 and 8 of the extruder die.

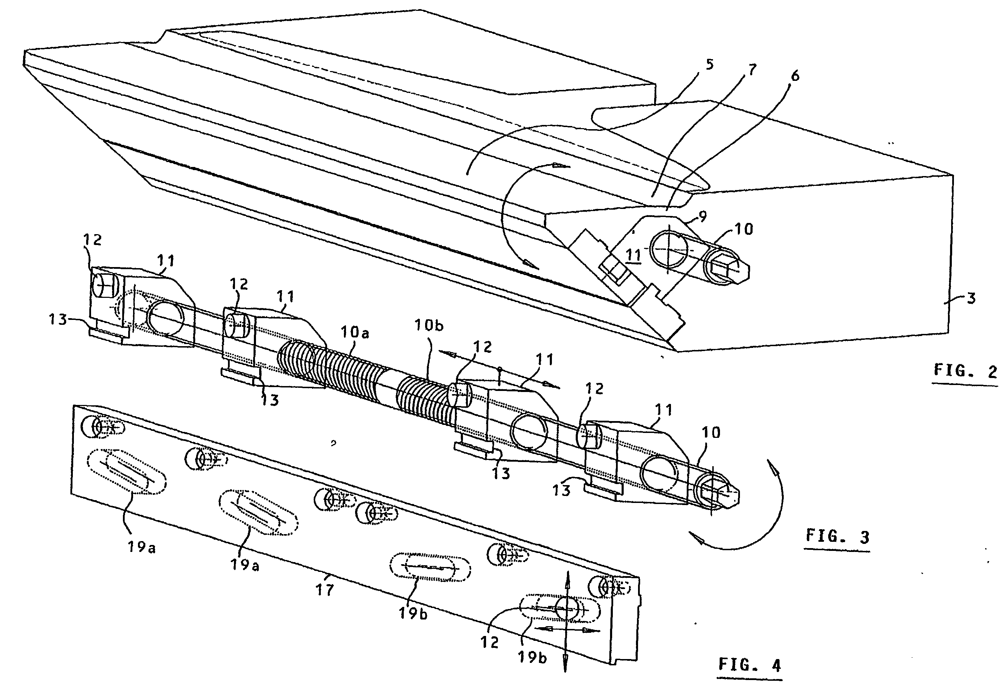

In the necking zone 6 of the bending zone of the lower lip 5, the profile of which is indicated with 9 in Figures 1 and 2, there is installed a drive screw 10, which is rotatably mounted on two lateral plates of the extruder die, not shown in the figures.

The screw 10, which extends throughout the whole width of the extruder die, comprises a first half portion 10a that has a clockwise thread and a second half portion 10b that has an anticlockwise thread.

At least a lead-nut block or preferably a plurality of lead-nut blocks 11 are installed over each of the two half portions of the screw.

As highlighted in Figure 3, by virtue of the opposite threadings of the segments 10a and 10b of the drive screw 10, the respective lead-nut blocks 11 engaged along the segment 10a and those engaged along the segment 10b of the screw will move in a mutually opposite direction upon rotation of the drive screw 10.

Each lead-nut-block is provided with a pin 12.

In the example shown, each lead-nut block 11 is shaped so to be loosely retained in a freely slidable manner into the transverse channel 9 that also defines the necking of the lip 5 of the lower body 3.

Each lead-nut block 11 may also be provided with a guiding channel 13, capable of coordinating itself with a rail or guide 14 that can be realized, as in the example of Figure 1, in the form of an assembling plate 15 solidly fixable to the lower body 3 through a plurality of stud screws 16.

A pushing plate 17 fastened, preferably in an adjustable manner, to the flexible lip 5 of the lower block 3 by way of a plurality of stud screws 18, completes the assembly.

As clearly rendered in Figure 4, the pushing plate 17 is essentially provided with pluralities of oppositely slanted slots 19a and 19b that are engaged by the pin 12 of a cooperating lead-nut block

In correspondence of a first segment 10a having a threading in a certain direction, of the drive screw 10, the slots 19a have a certain inclination, while in correspondence to the other segment 10b of the screw, having an opposite threading, the slots 19b have an opposite inclination of that of the slots 19a.

The two sets of slots 19a and 19b have dimensions capable of receiving the pins 12 of the relative lead-nut blocks 11, moving along the screw 10.

By turning the screw 10 in one or the other direction, the mutually reciprocal movement of the lead-nut blocks 11 transmit, through the pins 12 and the two sets of inclined slots 19a and 19b, a flexing movement of the lip 5 about an axis that can be identified somewhere within the necking zone 6, so to force closer to or parting the lip 5 from the opposite lip 8 of the upper block 2 of the extruder die, thus allowing for an accurate adjustment of the gap, that is of the extruding channel.

## Claims

1. A gap adjusting device between opposite lips (8, 5) of an extruder die (1) substantially composed of at least two blocks (2, 3) assembled together and terminating with a lip, at least one of which is elastically flexible (5) such to be adjustably more or less brought closer to the lip (8) of the other blocks (2), characterized in that it comprises
a screw (10) rotatably supported and extending parallel to said flexible lip and having a first segment (10a) with a clockwise thread and a second segment (10b) with an anticlockwise thread;
one or more lead-nut blocks (11) with a pin (12) extending normal to the axis of said screw (10), engaged on each of said segments (10a, 10b) of the screw and traveling on guide means (13);
at least a pushing plate (17), rigidly connected to said flexible lip (5) and provided with slots (19a, 19b) coordinately slanted in opposite directions, engaged by the pins (17) of said lead-nut blocks (11).

2. An adjusting device according to claim 1, characterized in that said guide means (13) cooperate with a guide (14) parallel to the axis of said screw composed of a plate (15) fastened to the body (3) of said extruder die having said flexible lip (5).

3. An extruder die for thermoplastic laminates composed of at least two bodies ending with a lip assembled together wherein one of said lips is elastically flexible to be forcibly brought closer or farther apart from the other lip with which it defines an extruding channel and characterized by comprising a device for adjusting the gap between said lips realized according to any of the preceding claims.

## Patentansprüche

1. Spalteinstellvorrichtung zwischen gegenüberliegenden Lippen (8, 5) eines Extruder-Mundstücks (1), das im wesentlichen aus wenigstens zwei Blöcken (2, 3) aufgebaut ist, die zusammengefügt sind und in einer Lippe enden, wovon wenigstens eine (5) elastisch biegsam ist, derart, daß sie in mehr oder weniger einstellbarer Weise näher an die Lippe (8) der anderen Blöcke (2) herangeführt werden kann, dadurch gekennzeichnet, daß sie umfaßt:
eine Schraube (10), die drehbar unterstützt ist und sich parallel zu der biegsamen Lippe erstreckt und ein erstes Segment (10a) mit Gewinde im Uhrzeigersinn und ein zweites Segment (10b) mit Gewinde im Gegenuhrzeigersinn besitzt;
einen oder mehrere Leitmutterblöcke (11), die einen Stift (12) besitzen, der sich senkrecht zur Achse der Schraube (10) erstreckt, die mit jedem der Segmente (10a, 10b) der Schraube in Eingriff sind und die sich auf Führungsmitteln (13) bewegen;
wenigstens eine Schubplatte (17), die mit der biegsamen Lippe (5) starr verbunden ist und mit Schlitzen (19a, 19b) versehen ist, die in entgegengesetzten Richtungen in gegenseitiger Abstimmung geneigt sind und mit den Stiften (17) der Leitmutterblöcke in Eingriff sind.

2. Einstellvorrichtung nach Anspruch 1, dadurch gekennzeichnet, daß die Führungsmittel (13) mit einer Führung (14) zusammenwirken, die zur Achse der Schraube parallel ist und aus einer Platte (15) gebildet ist, die am Körper (3) des Extruder-Mundstücks, der die biegsame Lippe (5) besitzt, befestigt ist.

3. Extruder-Mundstück für thermoplastische Laminate, das aus wenigstens zwei Körpern aufgebaut ist, die in einer Lippe enden und zusammengefügt sind, wobei eine der Lippen elastisch biegsam ist, um zwangsläufig an die andere Lippe, mit der sie einen Extruderkanal definiert, angenähert und von dieser entfernt zu werden, dadurch gekennzeichnet, daß es eine Vorrichtung zum Einstellen des Spalts zwischen den Lippen nach einem der vorhergehenden Ansprüche enthält.

## Revendications

1. Dispositif de réglage d'espace entre des lèvres opposées (8, 5) d'une filière d'une extrudeuse (1) constitué essentiellement d'au moins deux blocs (2, 3) assemblés et se terminant par une lèvre, au moins l'un d'entre eux étant élastiquement souple (5) de façon à être amené par réglage plus ou moins près de la lèvre (8) de l'autre bloc (2), caractérisé en ce qu'il comprend :
une vis (10) soutenue de manière rotative et s'étendant parallèlement à la lèvre souple et comportant un premier segment (10a) avec un filetage dans le sens des aiguilles d'une montre et un deuxième segment (10b) avec un filetage dans le sens inverse des aiguilles d'une montre ;
un ou plusieurs blocs-écrous d'entraînement (11) avec une tige (12) s'étendant de façon normale à l'axe de la vis (10), en prise sur chacun des segments (10a, 10b) de la vis et avançant sur des moyens de guidage (13) ; et
au moins une plaque de poussée (17) solidement raccordée à la lèvre souple (5) et dotée de fentes (19a, 19b) inclinées de manière coordonnée dans des directions opposées, en prise avec les tiges (17) des blocs-écrous d'entraînement (11).

2. Dispositif de réglage selon la revendication 1, caractérisé en ce que les moyens de guidage (13) coopèrent avec un guide (14) parallèle à l'axe de la vis constitué d'une plaque (15) fixée au corps (3) de la filière d'extrudeuse comportant la lèvre souple (5).

3. Filière d'une extrudeuse pour stratifiés thermoplastiques constituée d'au moins deux corps se terminant par une lèvre, assemblés l'un à l'autre, dans laquelle l'une des lèvres est élastiquement souple de façon à être rapprochée ou éloignée par force de l'autre lèvre avec laquelle elle définit un canal d'extrusion et caractérisée en ce qu'elle comprend un dispositif pour régler l'espace entre les lèvres selon l'une quelconque des revendications précédentes.
